# EUROPÄISCHE PATENTSCHRIFT

(11) **EP 0 467 896 B1**
(45) Veröffentlichungstag und Bekanntmachung des Hinweises auf die Patenterteilung: **23.06.1993**
(21) Anmeldenummer: 90904757.3
(22) Anmeldetag: 21.03.1990
(51) Int. Cl.: C02F 3/12, C02F 3/06

(54) **VERFAHREN ZUR BIOLOGISCHEN ABWASSERBEHANDLUNG MIT HILFE VON MIKROORGANISMEN**
PROCESS FOR THE BIOLOGICAL TREATMENT OF WASTE WATER USING MICROORGANISMS
PROCEDE DE TRAITEMENT BIOLOGIQUE DES EAUX USEES A L'AIDE DE MICRO-ORGANISMES

(30) Priorität: 11.04.1989 DE 3911789
(43) Veröffentlichungstag der Anmeldung: 29.01.1992
(73) Patentinhaber: J. STOG TEC GmbH, D-45731 Waltrop (DE)
(72) Erfinder: STOG, Jochen, D-4355 Waltrop (DE)
(74) Vertreter: Schulte, Jörg, Dipl.-Ing.
(86) Internationale Anmeldenummer: DE9000214
(87) Internationale Veröffentlichungsnummer: WO9011971

(56) Entgegenhaltungen:
- CH-A- 455 656
- GB-A- 587 400

## Beschreibung

Die Erfindung betrifft ein Verfahren zur biologischen Abwasserbehandlung mit Hilfe von Mikroorganismen, deren Lebensbedingungen durch Zuführung von Sauerstoff in einem mit leichter Steigung zur Wasseroberfläche angeordneten Kontaktstrecke mit innerer luftdurchlässiger und äußerer luftundurchlässiger Wandung verbessert werden, wobei Luft und belastetes Abwasser in die Kontaktstrecke zur Entwicklung der Mikroorganismen etwa parallel zur Wasseroberfläche eingebracht werden. Die Erfindung betrifft außerdem eine Vorrichtung zur Durchführung des Verfahrens mit einem Unterwassertraggerüst, in dem eine doppelwandige, mit leichter Steigung zur Wasseroberfläche angeordnete und die Luftbläschen erhaltende und diese am frühzeitigen Aufsteigen hindernden Einbauten aufweisende Leitung, die als Kontaktstrecke dienend das belastete, über einen Belüfter eingeführte Abwasser und die Luft aufnimmt.

Derartige Verfahren werden zur biologischen Reinigung von Schmutzwässern und vor allem zur Regenerierung von Gewässern eingesetz, die aufgrund fehlenden Sauerstoffes weitgehend verunreinigt und verschlammt sind. Eine hierzu eingesetzte bekannte Einrichtung (DE-PS 25 23 591) verfügt über eine Wasserstrahlpumpe, mit deren Hilfe ein Wasser-Luft-Gemisch erzeugt wird, das dann eine zeitlang in einer Leitung so geführt wird, daß die Luftblasen nicht zu schnell aufsteigen. Die Leitung ist so weit verlängert und mit einer luftdurchlässigen inneren Wandung und einer luftundurchlässigen äußeren Wandung versehen, daß die einzelnen möglichst kleinen Luftbläschen lange Wege zurücklegen müssen und in dieser Zeit intensiv mit dem Wasser kontaktieren. Auf diese Weise wird in einem bestimmten Bereich ein sauerstoffgesättigtes Wasser erreicht, so daß die den Schlamm vernichtenden Bakterien erhalten bleiben bzw. sich möglichst schnell vermehren können. Die Einrichtung steht mit ihrem Traggerüst auf dem Boden des Gewässers auf und kann bei Bedarf von einem Platz zum anderen transportiert werden. Um den nötigen Kontakt der Luftbläschen mit dem Wasser zur gewährleisten, weisen derartige Kontaktstrecken eine Länge von 15 m und mehr auf. In dem Inneren der Kontaktstrecke sind Einbauten vorgesehen, an denen sich die einzelnen Mikroorganismen zusätzlich festsetzen und entwickeln können, um so eine möglichst kurzfristige und umfassende Reinigung des Wassers zu gewährleisten. Nachteilig ist aber, daß sich die Mikroorganismen mehr oder weniger zufällig in Abhängigkeit vom Sauerstoff und vom Nahrungsmittelangebot, d.h. von den zugeführten Schmutzstoffen entwickeln. Auch werden die gerade eine optimale Arbeitsfähigkeit aufweisenden Mikroorganismen mit dem gereinigten Abwasser ausgetragen, was teilweise gewünscht ist, andererseits aber eine gleichmäßige Entwicklung von Mikroorganismen insgesamt beeinträchtigt. Besonders problematisch ist dies, wenn sich die Zusammensetzung des Abwassers ändert. Dann sind entweder nicht genügend Mikroorganismen vorhanden oder aber die vorhandenen Mikroorganismen können sich nicht umstellen bzw. die gerade benötigten Mikroorganism stehen nur in geringer oder geringster Anzahl zur Verfügung. Die GB-A-587 400 offenbart ein Verfahren zur Abwasserbehandlung in einer einfach quer zur Fließrichtung belüfteten Kontaktstrecke. Ein Teil der die Kontaktstrecke verlassenden Mikroorganismen wird mit aufgenommenem Schlamm wieder in die Kontaktstrecke zurückgeführt. Abgesehen davon, daß nur eine ungenügende Belüftung, d.h. Versorgung mit Sauerstoff, erreicht wird, zeigt der Hinweis auf die Rückführung von Schlamm ganz offensichtlich, daß nur ein geringer Reinigunserfold vorausgesetzt werden kann.

Der Erfindung liegt die Aufgabe zugrunde, ein Abwasserbehandlungsverfahren mit dauerhaft vergleichmäßigtem gutem Reinigungsergebnis zu schaffen, das in der Lage ist, sich zusätzlich an sich wesentlich ändernde Abwasserzusammensetzungen ohne großen Aufwand und kurzfristig anzupassen. Die Erfindung soll außerdem eine zur Durchführung des erfindungsgemäßen Verfahrens benötigte Vorrichtung aufzeigen.

Die Aufgabe wird erfindungsgemäß dadurch gelöst, daß ein Teil der die Kontaktstrecke verlassenden Mikroorganismen, die sich im belasteten Wasser entwickelt haben, gezielt aufgefangen in die Kontaktstrecke zurückgebracht und daß zusätzlich ein geringer Teilstrom belasteten Abwassers als eine Art Indikator vorab in den Ansiedlungsbereich der Mikroorganismen in der Kontaktstrecke gegeben wird.

Auf welche Art und Weise der benötigte Sauerstoff in die Kontaktstrecke oder aber in einen entsprechenden Belebungsbereich hineingebracht wird, ist zunächst einmal nicht entscheidend, da eine ausreichende Menge gesichert ist und das Wachsen der jeweils geeigneten Mikroorganismen durch die Rückführung gesunder und zur Population geeigneter Mikroorganismen gezielt verbessert wird. Dabei werden gerade die Mikroorganismen zurückgeführt, die im gereinigten Wasser nicht mehr ein ausreichendes Nahrungsangebot finden und damit optimal zur weiteren Vernichtung der Schadstoffe und auch zur Weiterentwicklung der benötigten Mikroorganismenstämme bestens geeignet sind. Darüber hinaus haben sie sich im belasteten Wasser dessen Beschaffenheiten berücksichtigend entwickelt können, so daß gerade die Stämme vorhanden sind, die zur optimierten biologischen Abwasserbehandlung benötigt werden. Durch eine derart gezielte Verfahrensführung und Behandlung der Mikroorganismen kann vorteilhafterweise das Verfahren selbst verkürzt werden, da gesunde und zur jeweiligen Reinigung bestens geeignete Mikroorganismen in ausreichender Menge zur Verfügung gestellt werden können.

Weiter wird der Tatsache Rechnung getragen, daß sich die Lebensbedingungen für die Mikroorganismen je nach Verschmutzungsgrad und Verschmutzungsart des Abwassers erheblich verändern können. Durch das eine Art Frühwarnsystem darstellende frühzeitige Einführen von geringen Mengen des auf die Kontaktstrecke zugeführten Abwassers ist ein plötzliches Vernichten der Mikroorganismen bzw. ein Ausfall der Reinigung verhindert. Der kleine Teilstrom des Abwassers bleibt ohne jede Einwirkung, wenn das Abwasser von den vorhandenen Mikroorganismen gereinigt werden kann. Ist aber eine andere Verschmutzung oder eine andere Zusammensetzung des Abwassers gegeben, so werden durch diesen geringen Teilstrom die dafür geeigneten Mikroorganismen bereits vorgezüchtet, so daß sie bei Eintreffen des entsprechend in der Zusammensetzung geänderten Abwassers sich schnell entwickeln und dafür Sorge tragen können, daß auch die Reinigung des gesamten Abwassers weiterhin gesichert ist. Vorteilhafterweise ist so ein gleitender Übergang möglich, ohne daß besondere Maßnahmen erforderlich sind. Es ist sogar so, daß sich die Anpassung ganz automatisch durch den Indikator ergibt.

Nach einer zweckmäßigen Ausführung der Erfindung ist vorgesehen, daß die Mikroorganismen im Gegenstrom in die Kontaktstrecke zurückgeführt werden. Die Mikroorganismen, die ansonsten im gereinigten Wasser nicht mehr das ausreichende Nahrungsangebot finden würden und damit sterben müßten, werden nun in der Kontaktstrecke gleichmäßig so verteilt, daß sie sich wiederum optimal ernähren und vermehren können. Hierzu dient das Einführen im Gegenstrom, das die gleichmäßige Verteilung der Mikroorganismen sichert.

Eine weitere Möglichkeit der gleichmäßigen Verteilung der Mikroorganismen ist die, den Teilstrom der Mikroorganismen in einem vorgegebenen Abstand in Fließrichtung hinter der Eingabestelle der Luft anzusaugen und dann zusammen mit der Luft und Wasser in der Kontaktstrecke zu verteilen. Die Mikroorganismen würden also entweder im Bereich der Wasserstrahlpumpe oder kurz dahinter eingeführt, so daß sie mit dem frischen Abwasserstrom, in dem ja auch die großen Mengen an Luftbläschen zugeführt werden, in den Bereich der Kontaktstrecke hineingespült werden. Dabei wird allerdings in Kauf genommen, daß hier das Wasser noch nicht mit Sauerstoff angereichert ist, so daß die weiter oben beschriebene Methode an sich die bessere ist, nach der die Mikroorganismen in einem gewissen Abstand zur Eingabestelle, d.h. zum Belüfter im Gegenstrom in die Kontaktstrecke eingegeben werden.

Die Anzahl der Mikroorganismen und auch ihrer Ausbildung als solche hängt wesentlich von der Sauerstoffsättigung des Wassers ab. Von daher ist eine besonders günstige Entnahme der Mikroorganismen in eine entsprechende Entfernung zu legen und andererseits auch die Menge entsprechend zu variieren, wobei erfindungsgemäß vorgesehen ist, daß die Ansaugstelle in Abhängigkeit von der Sauerstoffsättigung des Wassers und der Menge der vorhandenen Mikroorganismen in oder entgegen der Strömungsrichtung verschoben wird.

In der Regel wird es ausreichen, wenn man den Teilstrom des belasteten Abwassers an einer bestimmten Stelle in den Ansiedlungsbereich der Mikroorganismen hineinleitet. Dann, wenn eine möglichst schnelle Verteilung notwendig wird, oder aber, wenn die Veränderung des Wassers sehr entscheidend ist und durch Drittmaßnahmen vorher ermittelt worden ist, kann es vorteilhaft sein, den Teilstrom bei einer die Mikroorganismen in ihrer Gesamtheit gefährdeten Zusammensetzung des Abwassers mit Luft und Abwasser zusammen in die Kontaktstrecke einzuführen. Hierdurch wird eine Anpassung beschleunigt, insbesondere dann, wenn gemäß einer weiteren vorteilhaften Ausführung des vorliegenden Verfahrens die Menge des Teilstroms gesteigert wird. Dadurch wird ein kontinuierliches Begünstigen und Wachsen der Mikroorganismen vorbereitet, die beim Eintreffen der Abwasserfront des in der Zusammensetzung sich ändernden Abwassers benötigt werden.

Eine weitere Möglichkeit der Anpassung der Mikroorganismenentwicklung ist die, bei der die Zugabe an belastetem Abwasser reduziert und gleichzeitig die Ansaugstelle dichter an die Eingabestelle von Luft und belastetem Abwasser herangelegt wird. Auch auf diese Art und Weise kann der sich ändernden Zusammensetzung des Abwassers Rechnung getragen werden, insbesondere, wenn die bereits berücksichtigte Verschmutzung stärker wird als bisher, wobei durch das erfindungsgemäße Verfahren sichergestellt ist, daß dennoch immer der gleiche Reinigungserfolg gegeben ist.

Bei besonders gravierenden Änderungen in der Zusammensetzung des Abwassers kann es vorteilhaft sein, vorgezüchtete und der neuen Abwasserzusammensetzung angepaßte Mikroorganismen über die Ansaugstelle in den Kreislauf einzuschleusen, bis eine erneute Stabilisierung eingetreten ist. Diese Verfahrensvariante erfordert allerdings eine kontinuierliche Beobachtung und Kontrolle des Abwassers, um rechtzeitig die gezielt gezüchteten Mikroorganismen zugeben zu können und zwar in einem Zeitpunkt, wo sie wirklich benötigt werden und wo sie dann auch anschließend an der Ansaugstelle wieder vorzufinden sind und dann erneut ggf. mit weiter vorgezüchteten Mikroorganismen in den Kreislauf zurückgeführt werden.

Zur Durchführung der Erfindung ist eine Vorrichtung vorgesehen, bei der die Rückführung der gezüchteten Mikroorganismen in den Kreislauf dadurch erreicht wird, daß der Kontaktstrecke in Fließrichtung eine Ansaugstelle nachgeordnet ist, die über eine Frischorganismenleitung mit dem Belüfter verbunden ist. Über die Ansaugstelle werden somit die für die Nachzüchtung bzw. für die Reinigung des Wassers optimierten Mikroorganismen aufgefangen und dann durch die Frischorganismenleitung hindurch in den Belüfter bzw. zum Belüfter zurückgebracht. Dabei kann man sich den Sog des Belüfters zu Nutze machen, um über ihn die Mikroorganismen einzufangen bzw. anzusaugen und wieder in die Kontaktstrecke einzugeben. Das Zuführen des gering bemessenen Teilstroms von Abwasser in den Bereich des Belüfters stellt den Dauerbetrieb sicher. Dabei sind die Einströmöffnungen und damit ist die Länge der Ansaugleitung so bemessen, daß ein ausreichender Zeitraum verbleibt, um die Mikroorganismen vorzuzüchten, die für das entsprechend sich ändernde Abwasser geeignet sind.

Eine gezielte Rückführung der Mikroorganismen wird aber insbesondere dadurch gesichert, daß die Ansaugstelle mit einer Ansaugpumpe und austragsseitig mit einer Vielzahl von Austragsdüsen, die im Gegenstrom austragen ausgerüstet ist. Eine solche Ausbildung sichert einmal das Ansaugen genau der Mikroorganismen, die für die Weiterzüchtung benötigt werden und zum anderen deren gleichmäßiges Austragen über den gesamten Querschnitt der Kontaktstrecke, wobei unter Austragsdüsen im eigentlichen Sinne Öffnungen zu verstehen sind, die sicherstellen, daß die Mikroorganismen im Gegenstrom mindestens für eine kurze Strecke mit dem herangeführten Sauerstoff durchtränkten Abwasser vermischt werden.

Das gleichmäßige Ansaugen der mit Mikroorganismen vermischten Wässer wird dadurch optimiert, daß die Ansaugstelle eine Vielzahl über einen großen Querschnitt verteilt angeordneter Ansaugrohre aufweist.

Die Verlegung der Ansaugstelle genau in dem Bereich, wo sie besonders günstig Mikroorganismen und dabei besonders gesunde Mikroorganismen einfängt, ist gesichert, indem die Frischorganismenleitung teleskopierbar ausgebildet und daß ihr ein Antrieb zugeordnet ist. Über den Antrieb kann die teleskopierbare Leitung zusammengeschoben und auseinandergeschoben werden, um die Ansaugstelle so in den jeweils richtigen Bereich zu verlegen. Optimale Sicherheit gegen sich änderndes Abwasser erreicht mann gemäß der Erfindung dadurch, daß die Länge der Ansaugleitung der durchschnittlichen Wachstumsgeschwindigkeit von anaeroben, in Belebtschlamm auftretenden Mikroorganismen entsprechend gewählt ist.

Die Erfindung zeichnet sich insbesondere dadurch aus, daß ein Verfahren und auch eine Vorrichtung geschaffen ist, mit der die biologische Abwasserreinigung so weit systemmatisiert werden kann, daß ein gleichmäßiger Reinigungserfolg gesichert ist, auch dann, wenn sich das Abwasser in der Menge der Verunreinigung bzw. der Art der Verunreinigung verändert. Durch gezielte Züchtung gerade der Mikroorganismen, die den Abwasserproblemen gewachsen sind, und deren frühzeitige Ansiedlung im Bereich des Belüfters und der Kontaktstrecke ist ein kontinuierlicher Dauerbetrieb einer entsprechenden Vorrichtung gewährleistet und ist der durchschlagend gleichbleibende Reinigungserfolg gegeben.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine vereinfachte Darstellung einer Kontaktstrecke für die Abwasserreinigung,
- Fig. 2: die Darstellung des Verteilerrohres für die Rückführung der Mikroorganismen,
- Fig. 3: die Ansaugleitung für die Indiktatorabwassermenge und
- Fig. 4: eine vergrößerte Darstellung einer für die Durchführung des Verfahrens geeigneten Vorrichtung.

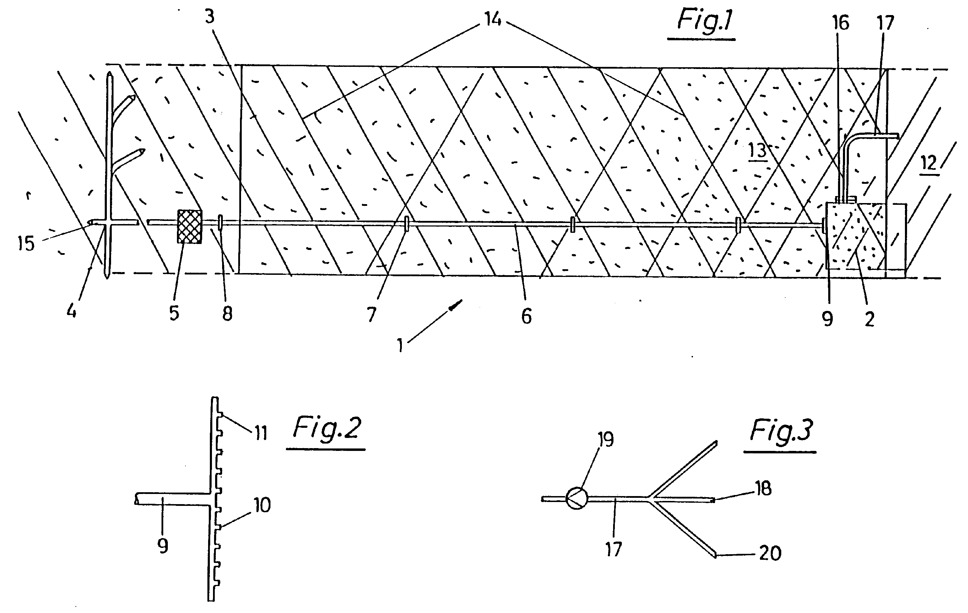

Fig. 1 zeigt eine Kontaktstrecke in vereinfachter Wiedergabe, wobei diese Kontaktstrecke (1) vereinfacht hier nur mit einer Wandung wiedergegeben ist. Am Streckenanfang ist der Belüfter (2) positioniert, am Streckenende (3) die Ansaugstelle (4), über die annähernd oder ganz ausgewachsene Mikroorganismen angesaugt und in den Bereich des Belüfters (2) zurückgebracht werden. Hierzu weist die Ansaugstelle eine Ansaugpumpe (5) auf und ist über die Frischorganismenleitung (6) mit dem Belüfter (2) verbunden.

Um die Ansaugstelle (4) jeweils an unterschiedlichen Stellen anordnen zu können, sind die Verbindungen zwischen den einzelnen Frischorganismenleitungsstücken (6) als Teleskopverbindungen (7, 8) ausgebildet. Dadurch kann die Leitung (6) jeweils zusammengeschoben oder auseinandergezogen werden, je nachdem, welchen Abstand die Ansaugstelle (4) vom Belüfter (2) haben soll. Nicht dargestellt ist in Fig. 1, daß hier ein motorischer Antrieb vorgesehen werden kann, um das Teleskopieren von der Wasseroberfläche bzw. einer Schwimmplattform aus vornehmen zu können.

Das Ende der Frischorganismenleitung (6) bildet ein Verteilerrohr (9), das in Fig. 2 detallierter wiedergegeben ist. Das Verteilerrohr (9) ist hier mit einer Vielzahl von Austragsdüsen (10, 11) ausgerüstet worden, um das gereinigte und eine Vielzahl von gesunden Mikroorganismen aufweisenden Wässern gleichmäßig und über einen entsprechend großen Querschnitt verteilt auszustoßen und zwar im Gegenstrom zum heranströmenden zu reinigenden Abwasser. Bei den Austragsdüsen (10, 11) handelt es sich grundsätzlich um einfache entgegen der Strömungsrichtung des Abwassers angeordnete Öffnungen bzw. Bohrungen.

Das in die Kontaktstrecke (1) einströmende Abwasser ist mit (12) bezeichnet, wobei der zunehmende Reinigungsgrad innerhalb der Kontaktstrecke (1) dadurch kenntlich gemacht ist, daß der Abstand zwischen den schräg von oben nach unten verlaufenden Strichen immer größer wird. Mit (13) ist das sauerstoffgesättigte Wasser bezeichnet, das hinter dem Belüfter (2) durch Einblasen von Luft seinen Sauerstoffgehalt etwas durch den Verbrauch durch die Mikroorganismen verringert. Auch dies ist dadurch kenntlich gemacht, daß die Dichte der Punkte von dem Streckenanfang zum Streckenende (3) hin abnimmt. Ebenfalls durch Striche, hier von unten nach links schräg oben verlaufende Striche ist der Wachstumsbereich (14) der Mikroorganismen gekennzeichnet. Entsprechend der zunehmenden Menge an Mikroorganismen wird der Abstand der von rechts unten nach links oben verlaufenden Striche enger.

Etwa im Bereich der optimal mit Mikroorganismen angereicherten Zone ist das Ansaugrohr (15) positioniert, das über eine Mehrzahl von Öffnungen verfügt, um auch aus unterschiedlichen Bereichen das mit Mikroorganismen angereicherte Wasserentnehmen zu können. Die einzelnen Öffnungen können mit Schiebern versehen sein, so daß aus unterschiedlichen Horizonten gezielt Wasser mit Mikroorganismen entnommen werden kann.

Ebenfalls im Bereich des Belüfters (2) endet eine über einen Stutzen (16) angeschlossene Ansaugleitung (17), über die weit aus dem Vorbereich der Kontaktstrecke (1) angesaugtes Schmutzwasser bzw. zu reinigendes Abwasser in geringer Menge in den Ansiedlungsbereich der Mikroorganismen hineingebracht wird, um auf diese Art und Weise eine Frühwarnung zu gewährleisten. Ändert sich nämlich die Zusammensetzung des zu reinigenden Abwassers, so wird gleichzeitig im Bereich der Ansiedlung der Mikroorganismen eine Umorientierung bei der Entwicklung eintreten, weil das entsprechende Abwasser hier zur Verfügung gestellt wird. Nach der Fig. 1 ist über den Stutzen (16) zwar eine unmittelbare Einleitung dieses geringen Stromes an Schmutzwasser in den Belüfter (2) vorgesehen, doch kann die Ansaugleitung (17) auch an den oberen oder unteren Rand der Kontaktstrecke (1) austragen.

Die Ansaugleitung (17) endet weit vor der Kontaktstrecke (1) ebenfalls durch eine Art Verteilerrohr, wobei hier ebenfalls mehrere Einströmöffnungen (18, 20) vorgesehen sind, durch die über die Pumpe (19) entsprechendes Schmutzwasser angesaugt und dann in der vorgegebenen geringen Menge in den Wachstumsbereich der Mikroorganismen hineingebracht wird.

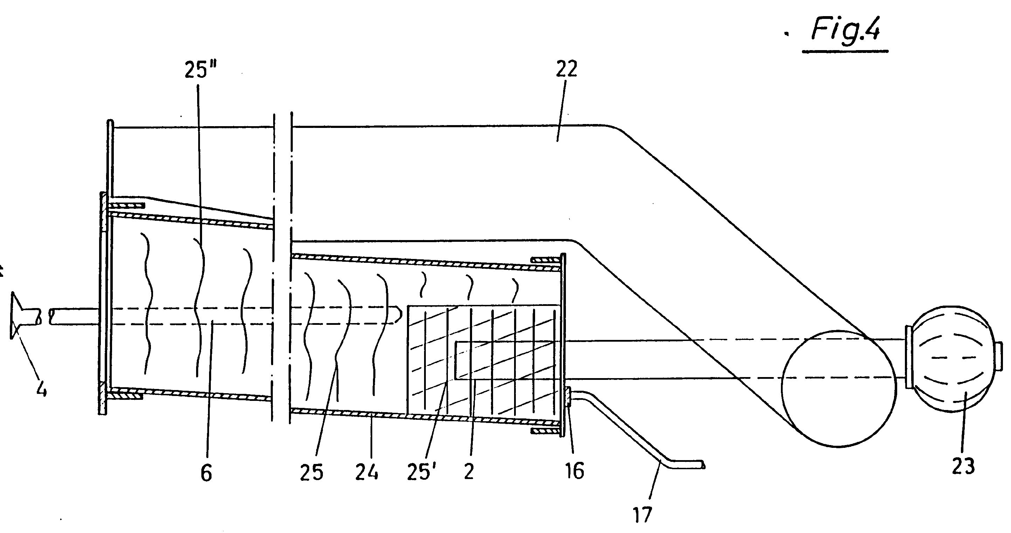

Fig. 4 schließlich zeigt ebenfalls in vereinfachter Ausbildung eine Vorrichtung, über die das erfindungsgemäße Verfahren verwirklicht werden kann, wobei hier ergänzend verdeutlicht ist, daß die Kontaktstrecke (1) in Form eines Plexiglasrohres (24) einem Unterwassertraggerüst (22) zugeordnet ist, über das der Abstand des Plexiglasrohres (24) zur Wasseroberfläche jeweils genau eingestellt und eingehalten werden kann. Über die Wasserstrahlpumpe (23) wird Schmutzwasser angesaugt und gleichzeitig Luft eingedüst, wo daß über den Belüfter (2) bereits ein Wasser-Luft-Gemisch in den Bereich des Plexiglasrohres (24) einströmt. Um die Luftbläschen am Aufsteigen zu hindern und andererseits den Mikroorganismen Flächen vorzugeben, wo sie sich anlagern können, sind im Plexiglasrohr (24) eine Vielzahl von Einbauten (25) vorgesehen, wobei hierzu unterschiedlichste Formgebungen möglich sind. Das Plexiglasrohr (24), d.h. also die Kontaktstrecke (1) verläuft mit geringer Neigung zur Wasseroberfläche, wobei auch hier auf eine zweite Wandung verzichtet worden ist, weil über die Einbauten (25) ausreichende Sicherungen gegeben sind, über die das frühzeitige Aufsteigen der Wasserblasen verhindert wird. Die Ausbildung als Plexiglasrohr (24) hat darüber hinaus den großen Vorteil, daß auch das für das Wachstum der Mikroorganismen genötigte Licht in ausreichender Menge zur Verfügung gestellt wird.

Bei der hier ebenfalls in Fig. 4 angedeuteten Frischorganismenleitung (6) ist die Ansaugstelle (4) einfach als Stutzen wiedergegeben, wobei durch die Wahl des Durchmessers der Frischorganismenleitung (6), durch die Stärke der Pumpe und auch ihrer Einstellung als solche die Menge an Mikroorganismen aufweisenden Wasser genau bestimmt werden kann, die in den Bereich des Belüfters (2) zurückgeleitet wird.

Bei den in Fig. 4 wiedergegebenen Einbauten (25) handelt es sich um eine Art Kunststoffschnüre, an denen sich die Mikroorganismen ansiedeln können. Diese Einbauten (25, 25', 25'') können aber auch, wie bereits erwähnt, andere Formen aufweisen, wobei es zweckmäßig ist, solche Einbauten (25, 25', 25'') zu verwenden, die große Flächen zur Verfügung stellen, an denen sich die Luftbläschen und die Mikroorganismen ansiedeln können.

## Patentansprüche

1. Verfahren zur biologischen Abwasserbehandlung mit Hilfe von Mikroorganismen, deren Lebensbedingungen durch Zuführung von Sauerstoff, in eine mit leichter Steigung zur Wasseroberfläche angeordneten Kontaktstrecke mit innerer luftdurchlässiger und äußerer luftundurchlässiger Wandung verbessert werden, wobei Luft und belastetes Wasser in die Kontaktstrecke zur Entwicklung der Mikroorganismen etwa parallel zur Wasseroberfläche eingebracht werden,
**dadurch gekennzeichnet,**
daß ein Teil der die Kontaktstrecke verlassenden Mikroorganismen, die sich im belasteten Wasser entwickelt haben, gezielt aufgefangen in die Kontaktstrecke zurückgebracht und daß zusätzlich ein geringer Teilstrom belasteten Abwassers als eine Art Indikator vorab in den Ansiedlungsbereich der Mikroorganismen in der Kontaktstrecke gegeben wird.

2. Verfahren nach Anspruch 1,
**dadurch gekennzeichnet,**
daß der Teil der Mikroorganismen im Gegenstrom in die Kontaktstrecke zurückgeführt wird.

3. Verfahren nach Anspruch 1,
**dadurch gekennzeichnet,**
daß der Teil der Mikroorganismen in einem vorgegebenen Abstand in Fließrichtung hinter der Eingabestelle der Luft angesaugt und dann zusammen mit der Luft und Wasser in der Kontaktstrecke verteilt wird.

4. Verfahren nach Anspruch 1 und Anspruch 3,
**dadurch gekennzeichnet,**
daß die Ansaugstelle in Abhängigkeit von der Sauerstoffsättigung des Wassers und der Menge der vorhandenen Mikroorganismen in oder entgegen der Strömungsrichtung verschoben wird.

5. Verfahren nach Anspruch 1,
**dadurch gekennzeichnet,**
daß der Teilstrom bei einer die Mikroorganismen in ihrer Gesamtheit gefährdenden Zusammensetzung des Abwassers mit Luft und Abwasser zusammen in die Kontaktstrecke eingeführt wird.

6. Verfahren nach Anspruch 3 und Anspruch 5,
**dadurch gekennzeichnet,**
daß die Zugabe an belastetem Abwasser reduziert und gleichzeitig die Ansaugstelle dichter an die Eingabestelle von Luft und belastetem Abwasser herangelegt wird.

7. Verfahren nach Anspruch 1 und einem oder mehreren der nachgeordneten Ansprüche,
**dadurch gekennzeichnet,**
daß vorgezüchtete und der neuen Abwasserzusammensetzung angepaßte Mikroorganismen über die Ansaugstelle in den Kreislauf so lange eingeschleust werden, bis eine erneute Stabilisierung eingetreten ist.

8. Vorrichtung zur Durchführung des Verfahrens nach Anspruch 1 oder einem oder mehreren der nachfolgenden Ansprüche, mit einem Unterwassertraggerüst, in dem eine doppelwandige, mit leichter Neigung zur Wasseroberfläche angeordnete und die Luftbläschen erhaltende und diese am frühzeitigen Aufsteigen hindernden Einbauten aufweisende Leitung, die als Kontaktstrecke dienend das belastete, über einen Belüfter eingeführte Abwasser und die Luft aufnimmt,
**dadurch gekennzeichnet,**
daß der Kontaktstrecke (1) in Fließrichtung eine Ansaugstelle (4) nachgeordnet ist, die über eine Frischorganismenleitung (6) mit dem Belüfter (2) verbunden ist, der einen Stutzen (16) aufweist, an den eine Ansaugleitung (17) mit geringem Querschnitt und einer dem Belüfter entgegen der Strömumgsrichtung weit vorgelagerten Einströmöffnung (18) angeschlossen ist.

9. Vorrichtung nach Anspruch8,
**dadurch gekennzeichnet,**
daß die Ansaugstelle (4) mit einer Ansaugpumpe (5) und austragsseitig mit einer Vielzahl von Austragsdüsen (10, 11), die im Gegenstrom austragen, ausgerüstet ist.

10. Vorrichtung nach Anspruch 8 und Anspruch 9,
**dadurch gekennzeichnet,**
daß die Ansaugstelle (4) eine Vielzahl über einen großen Querschnitt verteilt angeordnete Ansaugrohre (15) aufweist.

11. Vorrichtung nach Anspruch 8,
**dadurch gekennzeichnet,**
daß die Frischorganismenleitung (6) teleskopierbar ausgebildet und daß ihr ein Antrieb zugeordnet ist.

12. Vorrichtung nach Anspruch 8,
**dadurch gekennzeichnet,**
daß die Länge der Ansaugleitung (17) der durchschnittlichen Wachstumsgeschwindigkeit von anaeroben, in Belebtschlamm auftretende Mikroorganismen entsprechend gewählt ist.

## Claims

1. A method of biologically treating effluent by means of micro-organisms, the living conditions of which are improved by a supply of oxygen into a contact path disposed with a slight upward gradient to the surface of the water, with inner walls which are pervious to air and outer walls which are impervious to air, air and polluted water being fed into the contact path for development of the micro-organisms substantially parallel with the water surface, characterised in that some of the micro-organisms leaving the contact path and which have developed in the polluted water are trapped under control and returned to the contact path and in that in addition a small part of the flow of polluted waste water is used as a kind of indicator and is fed beforehand into the area of the contact path in which the micro-organisms settle.

2. A method according to Claim 1, characterised in that the portion of micro-organisms is returned to the contact path in counter-current.

3. A method according to Claim 1, characterised in that in the direction of flow, the portion of micro-organisms are drawn in at a given distance after the air intake point and then dispersed in the contact path together with the air and water.

4. A method according to Claim 1 and Claim 3, characterised in that the intake point is displaced in or against the direction of flow as a function of the oxygen saturation of the water and the quantity of micro-organisms present.

5. A method according to Claim 1, characterised in that in the event of an effluent composition which endangers the micro-organisms in their entirety, the partial flow is introduced into the contact path together with air and effluent.

6. A method according to Claim 3 and Claim 5, characterised in that the addition of polluted effluent is reduced while at the same time the intake point is moved closer to the intake point of air and polluted effluent.

7. A method according to Claim 1 and one or more of the subsequent Claims, characterised in that pre-grown micro-organisms adapted to the new effluent composition are sluiced into the circuit through the intake point until such time as fresh stabilisation has taken place.

8. An apparatus for carrying out the method according to Claim 1 or one or more of the subsequent Claims, with an underwater supporting framework in which, disposed at a slight inclination to the surface of the water there is a double-walled pipe which receives the air bubbles and has interior fittings which prevent the air bubbles from rising prematurely, the said pipe serving as a contact path and receiving the air and the polluted water which is introduced by an aerating means, characterised in that in the direction of flow there is downstream of the contact path (1) an intake point (4) connected by a fresh organism pipe (6) to the aerating means (2) which comprises a connector (16) to which an intake pipe (17) of small cross-section and which has an inlet aperture (18) disposed far in advance of the aerating means, against the direction of flow, is connected.

9. An apparatus according to Claim 8, characterised in that the intake point (4) is equipped with an intake pump (5) and, on the delivery side, with a plurality of delivery nozzles (10, 11) which discharge in counter-current.

10. An apparatus according to Claim 8 and Claim 9, characterised in that the intake point (4) has a plurality of intake tubes (15) which are distributed over a large cross-section.

11. An apparatus according to Claim 8, characterised in that the fresh organism pipe (6) is of telescopic construction and in that a drive is associated with it.

12. An apparatus according to Claim 8, characterised in that the length of the intake pipe (17) is chosen in accordance with the average rate of growth of anaerobic micro-organisms which occur in activated sludge.

## Revendications

1. Procédé de traitement biologique d'eaux usées à l'aide de micro-organismes dont les conditions de vie sont améliorées par amenée d'oxygène par un trajet de contact disposé en légère montée par rapport à la surface de l'eau avec une paroi intérieure perméable à l'air et extérieure imperméable à l'air, l'air et l'eau chargée étant amenés, dans le trajet de contact, pour le développement des micro-organismes, sensiblement parallèlement à la surface de l'eau,
caractérisé en ce
qu'une partie des micro-organismes quittant le trajet de contact, qui se sont développés dans l'eau chargée, est ramenée en étant interceptée de manière appropriée dans le trajet de contact et qu'additionnellement un courant partiel plus faible d'eaux usées chargées est d'abord amené, en tant qu'un type d'indicateur, dans la zone d'établissement des micro-organismes, à contre-courant, dans le trajet de contact.

2. Procédé selon la revendication 1,
caractérisé en ce
que la partie des micro-organismes est ramenée à contre-courant dans le trajet de contact.

3. Procédé selon la revendication 1,
caractérisé en ce
qu'une partie des micro-organismes est aspirée à une distance prédéfinie en direction d'écoulement derrière l'emplacement d'admission de l'air et est ensuite répartie ensemble avec l'air et l'eau dans le trajet de contact.

4. Procédé selon la revendication 1 et la revendication 3,
caractérisé en ce
que l'emplacement d'aspiration est déplacé dans la direction d'écoulement ou en sens contraire en fonction de la saturation en oxygène de l'eau et de la quantité des micro-organismes présents.

5. Procédé selon la revendication 1,
caractérisé en ce
que le courant partiel est introduit en même temps que de l'air et des eaux usées dans le trajet de contact dans le cas d'une composition des eaux usées menaçant les micro-organismes dans leur totalité.

6. Procédé selon la revendication 3 et la revendication 5,
caractérisé en ce
que l'addition d'eaux usées chargées est réduite et simultanément l'emplacement d'aspiration est réglé plus près de l'emplacement d'admission d'air et d'eaux usées chargées.

7. Procédé selon la revendication 1 et une ou plusieurs des revendications suivantes,
caractérisé en ce
que des micro-organismes précultivés et adaptés à la nouvelle composition des eaux usées sont éclusés par l'emplacement d'aspiration dans la circulation jusqu'à ce qu'une stabilisation répétée soit atteinte.

8. Dispositif pour la mise en oeuvre du procédé selon la revendication 1 ou une ou plusieurs revendications suivantes, avec un support pour les eaux souterraines avec une conduite disposée à légère inclinaison par rapport à la surface de l'eau et recevant les bulles d'air et présentant des chicanes empêchant leur montée prématurée, qui reçoit, en servant de trajet de contact, les eaux usées chargées introduites par l'intermédiaire d'un ventilateur et l'air,
caractérisé en ce
qu'un emplacement d'aspiration (4) est disposé après le trajet de contact (1) en direction d'écoulement, qui est relié par une conduite d'organismes frais (6) au ventilateur (2), qui présente une tubulure (16) à laquelle sont raccordées une conduite d'aspiration (17) à faible section transversale et une ouverture d'admission (18) disposée loin en avant, en direction opposée à l'écoulement, du ventilateur.

9. Dispositif selon la revendication 8,
caractérisé en ce
que l'emplacement d'aspiration (4) est équipé d'une pompe aspirante (5) et, du côté évacuation, d'une pluralité de buses d'évacuation (10, 11) qui évacuent à contre-courant.

10. Dispositif selon la revendication 8 et la revendication 9,
caractérisé en ce
que l'emplacement d'aspiration (4) présente une pluralité de tubes d'aspiration (15) répartis sur une grande section transversale.

11. Dispositif selon la revendication 8,
caractérisé en ce
que la conduite d'organismes frais (6) est réalisée télescopique et qu'un actionnement lui est adjoint.

12. Dispositif selon la revendication 8,
caractérisé en ce
que la longueur de la conduite d'aspiration (17) est choisie en correspondance à la vitesse moyenne de croissance de micro-organismes anaérobies se produisant dans une boue activée.
